# EUROPÄISCHE PATENTSCHRIFT

(11) **EP 2 676 541 B1**
(45) Veröffentlichungstag und Bekanntmachung des Hinweises auf die Patenterteilung: **17.10.2018**
(21) Anmeldenummer: 13001785.8
(22) Anmeldetag: 08.04.2013
(51) Int. Cl.: A01G 27/04

(54) **Bausatz für geschlossene Doppelwandgefäße zur selbstständigen Bewässerung von darin angeordneten Bepflanzungen**
Kit for closed double wall containers for self-acting watering of plantations arranged therein
Kit pour récipients fermés à paroi double pour l'irrigation automatique de plantations disposées à l'intérieur

(30) Priorität: 10.04.2012 DE 102012006976
(43) Veröffentlichungstag der Anmeldung: 25.12.2013
(73) Patentinhaber: Naumann, Frank, 04626 Vollmershain (DE)
(72) Erfinder: Naumann, Frank, 04626 Vollmershain (DE)
(74) Vertreter: Auerbach, Bettina

(56) Entgegenhaltungen:
- EP-A1- 0 065 161
- WO-A2-2011/040741
- DE-A1- 2 509 724
- GB-A- 2 218 609

## Beschreibung

Die Erfindung betrifft einen Bausatz für geschlossene Doppelwandgefäße zur selbstständigen Bewässerung von darin angeordneten Bepflanzungen. Dazu besteht dieser Bausatz aus einem Einfülltrichter mit Einfüllrohr, und einem Be- und Entlüftungsrohr.

Anwendung findet dieser Bausatz zum Nachrüsten von doppelwandig ausgestatteten Pflanz- und Tränkgefäßen mit einem selbsttätig sich regulierenden Wasserhaushalt im Bedarfsgefäß, wobei der durch die Doppelwand vorhandene Raum als Reservoir für das Wasser benutzt wird.

Eine Vorrichtung zur Aufnahme, zum Speichern und zur selbstregulierenden Abgabe von Flüssigkeit an ein Bedarfsgefäß, aus einem in einem Bedarfsgefäß integrierten Speichergefäß ist bereits in der DE 102009034157 A1 beschrieben. Das Speichergefäß besteht bei dieser Lösung aus einem über wenigstens eine bedarfsweise verschlussfähige Einfüllöffnung von Außen zugänglichen und ansonsten geschlossenem Gefäß, welches wenigstens eine Belüftungsöffnung und wenigstens eine Auslauföffnung aufweist und eine Einfüllöffnung mit einem bis annähernd zum Boden des Gefäßes ragenden Einfüllkanal formschlüssig in Kontakt ist und im geschlossenen Speichergefäß ein weiterer innerhalb des Speichergefäßes nach oben offener Luftkanal angeordnet ist. Dieser Luftkanal mündet im Seitenwandbereich des Gefäßes mit der Luftkanalöffnung im unteren Bereich. Die Anordnung dieser unteren Luftkanalöffnung des integrierten Luftkanals ist dabei im Bereich des Bedarfshöhenniveaus der Flüssigkeit im Bedarfsgefäß angeordnet. Desweiteren sind eine zum kontrollierten Entleeren des Speichergefäßes dienende Auslauföffnung ebenso wie die untere Luftkanalöffnung in der Gefäßwand des Speichergefäßes angeordnet, wobei die Auslauföffnung unterhalb des Höhenniveaus der Anordnung der unteren Luftkanalöffnung angeordnet ist und die Auslauföffnung zusätzlich mit einem kapillarfähigem Docht verschlossen ist.

Diese in den Zwischenraum der Doppelwand integrierte Lösung hat zwar den Vorteil einer Komplettlösung, birgt jedoch den Nachteil einer sehr komplizierten und kostenaufwendigen Herstellung in sich. Weiterhin wird für das Integrieren der Rohrleitungssysteme innerhalb des Bereichs der Doppelwand ein relativ großer Wandabstand zwischen den beiden Gefäßwänden des Doppelwandgefäßes benötigt.

Eine ähnliche Vorrichtung ist auch in der DE 2509724 A1 beschrieben. Es ist deshalb die Aufgabe der Erfindung, die Nachteile des Standes der Technik zu überwinden und eine vom Gefäß unabhängige Lösung zu schaffen, die es ermöglicht, bei einem vorhandenen Doppelwandgefäß eine Vorrichtung nachträglich anzuordnen, welche die Aufnahme und Speicherung von Wasser im Raumbereich der Doppelwand und die selbstregulierenden Abgabe von Flüssigkeit an den Pflanzbereich des Doppelwandgefäßes ermöglicht. Durch die zu schaffende Lösung soll die nachrüstbare Nutzung von vorhandenen geschlossenen Doppelwandgefäßen für die selbstregulierende Bewässerung ermöglicht werden.

Erfindungsgemäß wird dies durch die Merkmale des Anspruch 1 gelöst, wobei die vorteilhaften Ausgestaltungen in den Unteransprüchen beschrieben sind. Danach besteht ein Bausatz zur nachträglichen Anordnung an geschlossene Doppelwandgefäße zum Zwecke der selbstständigen Bewässerung von darin angeordneten Bepflanzungen aus einem Einfülltrichter mit Einfüllrohr, einem Belüftungsrohr und einem Entlüftungsrohr, wobei sowohl der Einfülltrichter mit dem daran angeordneten Einfüllrohr und das Lüftungsrohr mit dem Lüftungsadapter in einer im Bodenbereich des Pflanzbereiches des Doppelwandgefäßes anzuordnender Steckeinheit zusammengefasst angeordnet sind und diese Steckeinheit dort in einem anzuordnenden Aufnahmedurchbruch mit dem unteren Ende des Einfüllrohres anzuordnen ist. Die Steckeinheit weist am unteren Ende des Einfüllrohres einen der Be- und Entlüftung dienenden Siebkranz auf, welcher im Lüftungsadapter integriert angeordnet ist. Der Einfülltrichter ist hingegen mit einer das Überlaufmaß definierenden Zackenkrone ausgestattet, wobei die Unterkanten der Zacken der Zackenkrone niedriger anzuordnen ist als die unterste Kante des Lüftungsrohres im Bereich der Einmündung in die obere Wand des Doppelwandgefäßes.

Vorteilhafter Weise ist der Lüftungsadapter zur Wasserstandsregelung im Bedarfsbereich des Doppelwandgefäßes höhenverstellbar auf dem Einfüllrohr angeordnet.

Am unteren Ende des Einfüllrohres ist vorzugsweise bei größeren Doppelwandgefäßen ein der Aufnahme und der Lagedefinition des Schwimmers dienender Schwimmerkorb angeordnet ist, so dass die Wasserregulation einstellbar gestaltet ist und je nach Bedarf eingerichtet werden kann.

Es besteht auch die Möglichkeit, dass der Schwimmerkorb direkt am Ende des Entlüftungsadapters angeordnet werden kann.

Zur vorteilhaften Abdichtung der Bausatzanordnung am Aufnahmedurchbruch im Bodenbereich des Doppelwandgefäßes ist unterhalb des Siebkranzes am Entlüftungsadapter eine sich konisch nach unten verjüngende Dichtungshülse angeordnet.

Die Anordnung des Lüftungsrohres in einem Durchbruch im oberen Bereich des Doppelwandgefäßes erfolgt mit einer luftdicht abgeschlossenen Verbindung, so dass keine Beeinflussung des Druckausgleichs im Bereich der Doppelwand durch die Umgebungsluft erfolgen kann. Vorzugsweise kann diese Verbindung durch eine Gummimanschettenverbindung realisiert werden.

Das Lüftungsrohr selbst ist vorzugsweise mittels angeordneter Befestigungsclips am Einfüllrohr und/oder am Einfülltrichter angeordnet. Vorteilhafter Weise sind wenigstens beidseitig an der äußeren Peripherie des Einfülltrichters und/oder am Einfüllrohr Befestigungsclips mit unterschiedlich großen Klemmvorrichtungen für die Aufnahme von unterschiedlich großen Lüftungsrohrdurchmessern angeordnet. Dadurch ist die Steckeinheit für verschiedene Doppelwand-Gefäßgrößen gleichermaßen und flexibel einsetzbar.

Die am Lüftungsadapter anzuordnende Aufnahmevorrichtung für das Lüftungsrohr ist als Stufenlochaufnahme ausgebildet und kann dadurch auch zur Aufnahme unterschiedlich groß dimensionierter Lüftungsrohrquerschnitte flexibel eingesetzt werden, ohne dass ein weiterer Lüftungsadapter notwendig ist.

Zur Verhinderung von Verschmutzung sowie eines zusätzlichen Wassereintritts in das System infolge Regen und zur Abdeckung des Belüftungsrohreinbindung in die Bedarfsgefäßwand des Doppelwandgefäßes ist der Einfülltrichter vorteilhafter weise mit einem Deckel ausgestattet. Der Deckel ist so geformt, dass er mit der Oberkante des Einfülltrichters einen Formschluss herstellt und so ein fester Sitz realisiert wird.

Zur Aufnahme eines den Wasserstand anzeigenden Schwimmers ist am unteren Ende des Einfüllrohres ein Schwimmeradapter angeordnet, bei dem an dessen Umfang als Durchbruch ausgebildete Wasseraustrittsöffnungen ausgebildet sind. Unter diesen Wasseraustrittsöffnungen sind weiterhin Entlüftungsöffnungen angeordnet ist, wobei der Schwimmeradapter im Inneren einen nach oben herausnehmbaren kegelförmigen Konus zur Abführung und Ableitung des Wassers beim Befüllprozess in die Wasseraustrittsöffnungen aufweist. Der Konus weist mittig eine Durchbruchöffnung für die Durchführung des Schwimmerstabes auf. Sollte es zu einem Verkanten oder Verschmutzen des Schimmers kommen, dann kann der Schwimmer mit dem kegelförmigen Konus nach oben aus dem Einfüllrohr entnommen und erneut wieder eingesetzt werden.

Um den Einsatz der Steckeinheit auch für Gefäße mit einem größeren Abstand der zwei im Bodenbereich angeordneten Bodenplatten des Doppelwandgefäßes einsatzfähig zu gestalten ist an dem Schwimmeradapter eine der Führung des Schwimmers dienende Verlängerungshülse angeordnet. Dadurch wird der Schimmer innerhalb der Verlängerungshülse weiterhin geführt und kann sich nicht verkanten.

Diese erfindungsgemäße Steckeinheit bietet eine nachrüstbare Lösung für alle geschlossen ausgebildeten Doppelwandgefäße, um ein selbstständig sich regulierende Bewässerung von darin angeordneten Bepflanzungen realisieren zu können. Die Steckeinheit ist flexibel einsetzbar und besitzt viele Vorkehrungen, welche dazu führen dass die Steckeinheit für unterschiedlich große Töpfe sowie unterschiedlich große Lüftungsrohre angepasst einsetzbar ist.

Die Erfindung soll nachfolgend an einem Ausführungsbeispiel näher erläutert werden.

In der beigefügten Zeichnung zeigen:
- Fig. 1: eine schematischen Längsschnitt einer Steckeinheit mit Einfülltrichter 2, Einfüllrohr 3, Lüftungsadapter 5, Lüftungsrohr 4 und der Anordnung des Schwimmers;
- Fig. 2: eine schematische Ansicht eines Einfülltrichters 2 mit Zackenkronenausbildung 7 und Befestigungsclip 10 für die Anordnung des Lüftungsrohres 4;
- Fig. 3: eine schematische Seitenansicht des Lüftungsadapters 5 mit Siebkranzausbildung und einer Schnittdarstellung der Aufnahmevorrichtung 11 für das Lüftungsrohres 4;
- Fig. 4: ein schematischer Längsschnitt des unteren teils des Einfüllrohres 3 mit Lüftungsadapter 5 und Schwimmeradapter 13 sowie Verlängerungshülse 16;
- Fig. 5: einen schematischen Längsschnitt eines Schwimmeradapters 13 mit Wasserauslauföffnungen 14, Entlüftungsöffnungen 15 sowie Konus 17 und der Schwimmeranordnung;
- Fig. 6: eine schematische Seitenansicht des Lüftungsadapters 5 mit Siebkranzausbildung, darunter angeordneter Dichtungshülse 19 und Schwimmerkorb 20 und
- Fig. 7: eine schematische Seitenansicht des Lüftungsadapters 5 mit Siebkranzausbildung, darunter angeordneter Dichtungshülse 19, durchgehendem Einfüllrohr 3 und an dessen unterem Ende angeordnetem Schwimmerkorb 20.

### Ausführungsbeispiel:

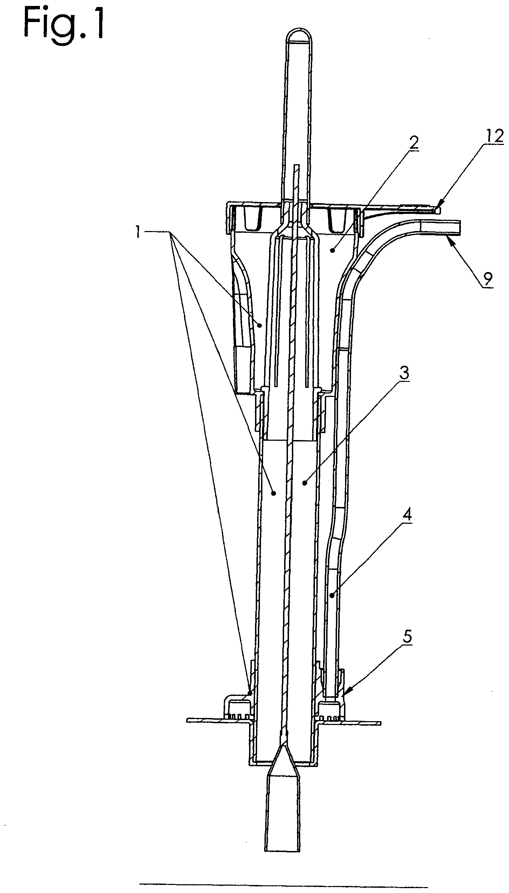

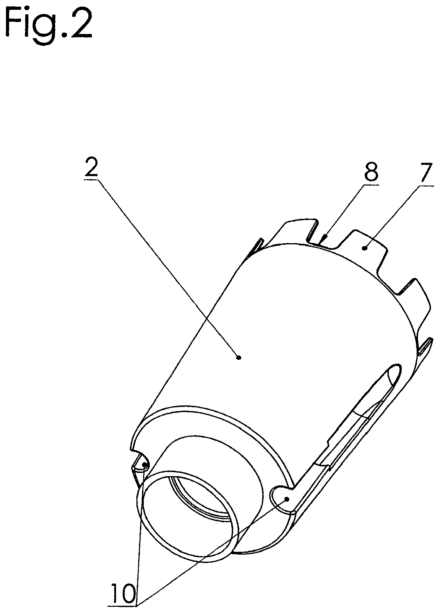

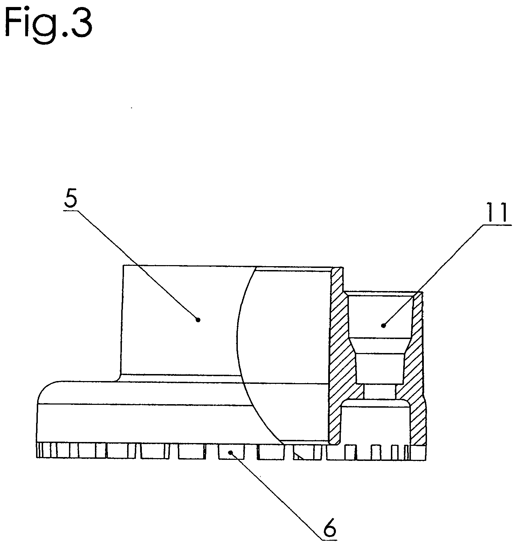

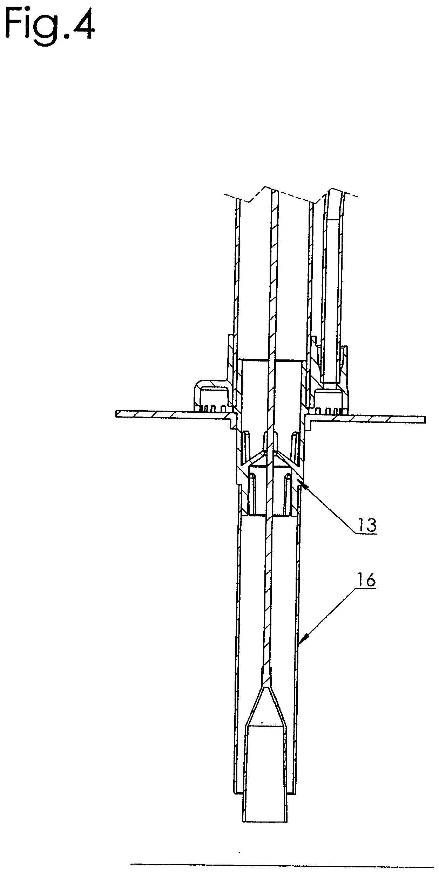

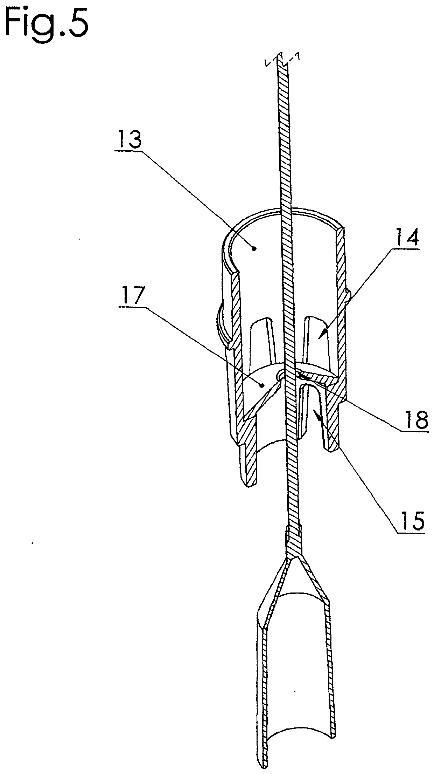

Gemäß der Figuren 1 bis 5 besteht ein erfindungsgemäßer Bausatz für Geschlossene Doppelwandgefäße zur selbstständigen Bewässerung von darin angeordneten Bepflanzungen, bestehend aus einem Einfülltrichter mit Einfüllrohr, einem Belüftungsrohr und einem Entlüftungsrohr, wobei der Einfülltrichter 2 mit den daran angeordneten Einfüllrohr 3, das Lüftungsrohr 4 mit dem an dessen unteren Ende angeordneten Lüftungsadapter 5 in einer Steckeinheit 1 zusammengefasst angeordnet sind, welche mit den Einfüllrohr 3 und dem daran angeordneten Lüftungsadapter 5 im Bodenbereich des Doppelwandgefäßes und mit dem entgegen gesetzten Ende des Lüftungsrohrs 4 im oberen Wandbereich des Bedarfsgefäßes des Doppelwandgefäßes anzuordnen ist. Die Steckeinheit 1 ist, wie aus den Figuren 1 und 4 ersichtlich, im unteren Bereich des Doppelwandgefäßes in einem dort anzuordnenden Aufnahmedurchbruch mit dem unteren Ende des Einfüllrohres 3 eingesteckt. Auf den Einfüllrohr 3 ist der Lüftungsadapter verschiebbar aufgesteckt.

Der Lüftungsadapter 5 weist einen der Be- und Entlüftung dienenden Siebkranz 6 auf, welcher nach dem Einstecken des Einfüllrohres in den Aufnahmedurchbruch des Doppelwandgefäßes bis zu dessen Bodenbereich herunter geschoben wird und dort aufsitzt.

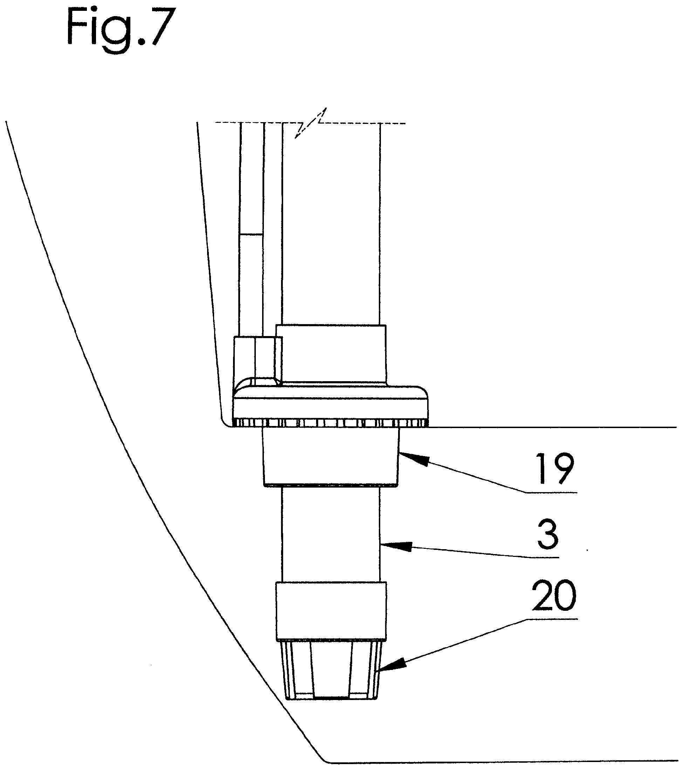

Es ist auch möglich, wie aus Figur 7 zu erkennen, dass am unteren Ende des Einfüllrohres 3, vorzugsweise bei größeren Doppelwandgefäßen, ein der Aufnahme und der Lagedefinition des Schwimmers dienender Schwimmerkorb angeordnet ist, so dass die Wasserregulation einstellbar gestaltet ist und je nach Bedarf eingerichtet werden kann.

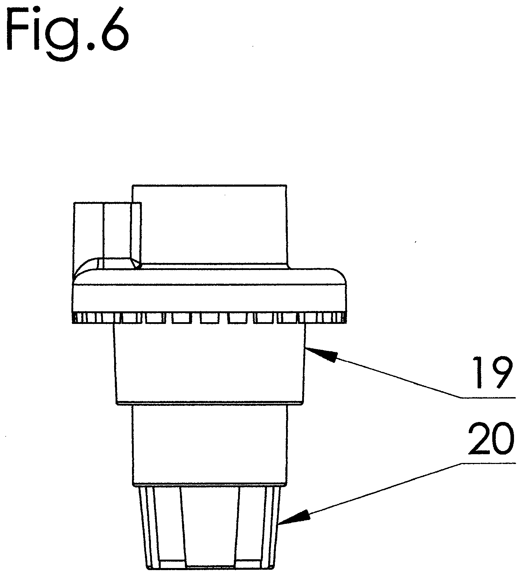

Es besteht auch die Möglichkeit gemäß der Figur 6, dass der Schwimmerkorb 20 direkt am Ende des Entlüftungsadapters 5 angeordnet werden kann, um den Abstand zum Bodenbereich des Doppelwandgefäßes zu überbrücken.

Zur vorteilhaften Abdichtung der Bausatzanordnung am Durchbruch im ersten Bodenbereich des Doppelwandgefäßes ist unterhalb des Siebkranzes 6 am Lüftungsadapter 5 eine sich konisch nach unten verjüngende Dichtungshülse 19 angeordnet.

Am Lüftungsadapter 5 ist auch die Aufnahmevorrichtung 11 für die Aufnahme des Lüftungsrohres 4 angeordnet. Vorteilhafter Weise ist diese Aufnahmevorrichtung als Stufenlochaufnahme zur Aufnahme unterschiedlich groß dimensionierter Lüftungsrohrquerschnitte ausgebildet. Das Lüftungsrohr 4 ist mit dem anderen Ende in einem Durchbruch im oberen Bereich des Doppelwandgefäßes mit einer luftdicht verschließenden Verbindung angeordnet. Dadurch ist ein geschlossenes Luftsystem beim Einfüllprozess geschaffen, wodurch ein den Wasserstand und Luftdruck selbst regulierendes System entsteht.

Der Einfülltrichter 2 ist dazu mit einer das Überlaufmaß definierenden Zackenkrone 7 ausgestattet, wobei zur Verhinderung der Überfüllung des Bereichs in der Doppelwand die Unterkanten 8 der Zacken der Zackenkrone 7 immer niedriger als die unterste Kante 9 des Lüftungsrohres 4 im angeordneten Zustand im Bereich der Einmündung in die obere Wand des Doppelwandgefäßes angeordnet sein muss. An der Peripherie des Einfülltrichters 2 und auch am Einfüllrohr 3 sind zur Befestigung des Lüftungsrohres 3 jeweils Befestigungsclips 10 mit unterschiedlich groß ausgebildeten Klemmvorrichtungen angeordnet. Dadurch besteht die Möglichkeit, unterschiedlich groß dimensionierte Lüftungsrohrquerschnitte mit ein und demselben Einfülltrichter 2 und Clip am Einfüllrohr 3 zu befestigen. Um den flexiblen Einsatz der Steckeinheit 1 zu erweitern ist am unteren Ende des Einfüllrohres 3 ein der Aufnahme eines Schwimmers dienender Schwimmeradapter 13 angeordnet.

Er weist an dessen Umfang Wasseraustrittsöffnungen 14 auf. Oberhalb dieses Bereiches ist im Inneren ein nach oben herausnehmbarer Konus 17 angeordnet. Er dient einerseits der Wasserführung zu den Wasseraustrittsöffnungen 14 während des Befüllprozesses und andererseits dem Schutz des Schwimmers, um von dem Befüllwasser nicht beaufschlagt und dadurch von seinem perfekten Sitz abgelenkt zu werden sowie das Messergebnis zu verfälschen. Der Konus 17 weist mittig eine Durchbruchsöffnung 18 auf, wodurch der Stab des darunter angeordneten Schwimmers hindurch geführt wird. Dadurch besteht die Möglichkeit, dass bei einem dennoch stattgefundenen Verklemmen oder Verschmutzen des Schwimmers dieser mit dem Konus nach oben herausgenommen werden kann und anschließend wieder in der Steckeinheit neu positioniert werden kann.

Unterhalb der Konusauflagekante im Schwimmeradapter 13 sind auch peripher Am Umfang Entlüftungsöffnungen 15 angeordnet. Diese dienen auch dem Schutz des Schwimmers während des Befüllprozesses, so dass die verdrängte Luft entweichen kann und die Schwimmerposition und Funktionalität durch einen erhöhten Luftdruck nicht beeinträchtigt wird.

Um die Steckeinheit auch für größere Töpfe einsatzfähig gestalten zu können, besteht die Möglichkeit, an dem Schwimmeradapter 13 eine der Führung des Schwimmers dienende Verlängerungshülse 16 anzuordnen. Dadurch wird der größere Abstand innerhalb der Doppelwand im Bodenbereich des Doppelwandgefäßes überbrückt und der Schwimmer sicher geführt.

Im oberen Randbereich des Einfülltrichters 2 ist ein Deckel 12 so angeordnet, dass er mit dem Rand des Einfülltrichters einen formschlüssigen Sitz erzeugt. Weiterhin ist der Deckel so geformt, dass er wenigstens einseitig über das Maß des Einfülltrichters 12 hinausragt und so den bereich der Einmündung des Lüftungsrohres 4 in den oberen Wandbereich des Doppelwandgefäßes abdeckt. Durch die gewonnene vergrößerte Oberfläche des Deckels besteht die Möglichkeit der sichtbaren Anordnung von Werbemaßnahmen auf diesem Deckel.

Mit der Steckeinheit wurde eine praktische, zuverlässige und zugleich elegante Lösung zur nachträglichen Ausrüstung von geschlossenen Doppelwandgefäßen mit einem selbst regulierenden Bewässerungssystem und einem Wasserreservoire geschaffen, welches mit Hilfe von zwei Durchbruchsanordnungen im ansonsten geschlossenen Doppelwandgefäßes anzuordnen ist, welche zudem flexibel in verschieden große Doppelwandgefäße eingesetzt werden kann.

### Bezugszeichenliste

1 Steckeinheit
2 Einfülltrichter
3 Einfüllrohr
4 Lüftungsrohr
5 Lüftungsadapter
6 Siebkranz
7 Zackenkrone
8 Unterkante der Zacken der Zackenkrone 7
9 Lüftungsrohrunterkante
10 Befestigungsclip
11 Aufnahmevorrichtung für das Lüftungsrohr 4 am Lüftungsadapter 5
12 Deckel des Einfülltrichters 2
13 Schwimmeradapter
14 Wasseraustrittsöffnungen
15 Entlüftungsöffnungen
16 Verlängerungshülse
17 Konus
18 Durchbruchsöffnung
19 Dichtungshülse
20 Schwimmerkorb

## Patentansprüche

1. . Bausatz für geschlossene Doppelwandgefäße zur selbstständigen Bewässerung von darin angeordneten Bepflanzungen, bestehend aus einem Einfülltrichter mit Einfüllrohr, einem Be- und Entlüftungsrohr, **dadurch gekennzeichnet, dass** sowohl der Einfülltrichter (2) mit den daran angeordneten Einfüllrohr (3) und das Be- und Entlüftungsrohr (4) mit einem Lüftungsadapter (5) in einer im Bodenbereich eines Doppelwandgefäßes anzuordnenden Steckeinheit (1) angeordnet sind,
**dass** diese Steckeinheit (1) im unteren Bereich des Doppelwandgefäßes in einem dort anzuordnenden Aufnahmedurchbruch mit dem unteren Ende des Einfüllrohres (3) anzuordnen ist, ***dass** die Steckeinheit (1) am unteren Ende des Einfüllrohres (3)* den, mit einem *der Be- und Entlüftung dienenden Siebkranz (6) ausgestatteten Lüftungsadapter (5) aufweist,*
***dass** am Lüftungsadapter (5)* eine *Aufnahmevorrichtung (11) für das* Be- und Entlüftungsrohr *(4) als Stufenlochaufnahme zur Aufnahme unterschiedlich groß dimensionierter Lüftungsrohrquerschnitte ausgebildet ist und **dass** das* Be- und Entlüftungsrohr *(4) in einem Durchbruch im oberen Bereich des Doppelwandgefäßes mit einer luftdicht verschließenden Verbindung,* anzuordnen *ist.*

2. . Bausatz für geschlossene Doppelwandgefäße zur selbstständigen Bewässerung von darin angeordneten Bepflanzungen nach dem Anspruch 1, **dadurch gekennzeichnet, dass** der Einfülltrichter (2) mit einer das Überlaufmaß definierenden Zackenkrone (7) ausgestattet ist, wobei die Unterkanten (8) der Zacken der Zackenkrone (7) niedriger als die unterste Kante (9) des Be- und Entlüftungsrohr (4) im Bereich der Einmündung in die obere Wand des Doppelwandgefäßes ausgebildet ist.

3. . Bausatz für geschlossene Doppelwandgefäße zur selbstständigen Bewässerung von darin angeordneten Bepflanzungen nach einem der Ansprüche 1 bis 2, **dadurch gekennzeichnet, dass** der Lüftungsadapter (5) zur Wasserstandsregelung im Bedarfsbereich des Doppelwandgefäßes höhenverstellbar auf dem Einfüllrohr (3) angeordnet ist.

4. . Bausatz für geschlossene Doppelwandgefäße zur selbstständigen Bewässerung von darin angeordneten Bepflanzungen nach einem der Ansprüche 1 bis 2, **dadurch gekennzeichnet, dass** am unteren Ende des Einfüllrohres (3) ein der Aufnahme und der Lagedefinition eines Schwimmers dienender Schwimmerkorb (20) angeordnet ist.

5. . Bausatz für geschlossene Doppelwandgefäße zur selbstständigen Bewässerung von darin angeordneten Bepflanzungen nach einem der Ansprüche 1 bis 2, **dadurch gekennzeichnet, dass** unterhalb des Siebkranzes am Lüftungsadapter (5) eine konisch sich nach unten verjüngende Dichtungshülse (19) angeordnet ist.

6. . Bausatz für geschlossene Doppelwandgefäße zur selbstständigen Bewässerung von darin angeordneten Bepflanzungen nach dem Anspruch 5, **dadurch gekennzeichnet, dass** am unteren Ende des Lüftungsadapters (5) ein der Aufnahme und der Lagedefinition des Schwimmers dienender Schwimmerkorb (20) angeordnet ist.

7. . Bausatz für geschlossene Doppelwandgefäße zur selbstständigen Bewässerung von darin angeordneten Bepflanzungen nach einem der Ansprüche 1 bis 4, **dadurch gekennzeichnet, dass** das Be- und Entlüftungsrohr (4) mittels Befestigungsclip (10) am Einfüllrohr (3) und/oder am Einfülltrichter (2) angeordnet ist.

8. . Bausatz für geschlossene Doppelwandgefäße zur selbstständigen Bewässerung von darin angeordneten Bepflanzungen nach Anspruch 5, **dadurch gekennzeichnet, dass** der Befestigungsclip (10) wenigstens beidseitig an der äußeren Peripherie des Einfülltrichters (2) und/oder am Einfüllrohr (3) mit unterschiedlich großen Klemmvorrichtungen für die Aufnahme von unterschiedlich dimensionierten Lüftungsrohrdurchmessern angeordnet ist.

9. . Bausatz für geschlossene Doppelwandgefäße zur selbstständigen Bewässerung von darin angeordneten Bepflanzungen nach einem der Ansprüche 1 bis 6, **dadurch gekennzeichnet, dass** der Einfülltrichter (2) mit einem den Formschluss herstellenden Deckel (12) ausgestattet ist.

10. . Bausatz für geschlossene Doppelwandgefäße zur selbstständigen Bewässerung von darin angeordneten Bepflanzungen nach einem der Ansprüche 1 bis 7, **dadurch gekennzeichnet, dass** am unteren Ende des Einfüllrohres (3) ein der Aufnahme eines Schwimmers dienender Schwimmeradapter (13) mit am dessen Umfang als Durchbruch ausgebildeten Wasseraustrittsöffnungen (14) und darunter angeordneten Entlüftungsöffnungen (15) einsteckbar angeordnet ist, wobei der Schwimmeradapter (13) im Inneren einen nach oben herausnehmbaren Konus (17) zur Abführung des Wassers beim Befüllprozess und einer am Konus (17) mittig angeordneten Durchbruchöffnung (18) für die Durchführung des Schwimmerstabes aufweist.

11. . Bausatz für geschlossene Doppelwandgefäße zur selbstständigen Bewässerung von darin angeordneten Bepflanzungen nach dem Anspruch 10, **dadurch gekennzeichnet, dass** an dem Schwimmeradapter (13) eine der Führung des Schwimmers dienende Verlängerungshülse (16) angeordnet ist.

## Claims

1. Kit for closed double wall containers for independent watering of plants arranged therein, consisting of a filling hopper with filling pipe, a ventilating and exhaust pipe,
**characterized in**
**that** both the filling hopper (2) with the filling pipe (3) arranged thereon and the ventilating and exhaust pipe (4) with a ventilation adapter (5) are arranged in a plug-in unit (1) to be arranged in the bottom region of a double wall container,
**that** this plug-in unit (1) is to be arranged with the lower end of the filling pipe (3) in the lower region of the double wall container in a receiving aperture to be arranged there,that the plug-in unit (1) has, at the lower end of the filling pipe (3), the ventilation adapter (5) which is equipped with a screen rim (6) serving for ventilation and exhaust, **that** a receiving device (11) for the ventilating and exhaust pipe (4) is formed on the ventilation adapter (5) as a stepped hole receptacle to receive ventilation pipe cross sections of different dimensions, and **that** the ventilating and exhaust pipe (4) is to be arranged in an aperture in the upper region of the double wall container with a connection for airtight closure.

2. Kit for closed double wall containers for independent watering of plants arranged therein according to claim 1, **characterized in that** the filling hopper (2) is equipped with a toothed crown (7) defining the extent of the overflow, wherein the lower edges (8) of the teeth of the toothed crown (7) are lower than the lowest edge (9) of the ventilating and exhaust pipe (4) in the region of the opening into the upper wall of the double wall container.

3. Kit for closed double wall containers for independent watering of plants arranged therein according to one of claims 1 and 2, **characterized in that** the ventilation adapter (5) is arranged on the filling pipe (3) so as to be adjustable in height for regulating the water level within the required range of the double wall container.

4. Kit for closed double wall containers for independent watering of plants arranged therein according to one of claims 1 and 2, **characterized in that** a float cage (20) which serves for receiving and defining the position of a float is arranged at the lower end of the filling pipe (3).

5. Kit for closed double wall containers for independent watering of plants arranged therein according to one of claims 1 and 2, **characterized in that** a gasket (19) which tapers conically downwards is arranged below the screen rim on the ventilation adapter (5).

6. Kit for closed double wall containers for independent watering of plants arranged therein according to claim 5, **characterized in that** a float cage (20) which serves for receiving and defining the position of the float is arranged at the lower end of the ventilation adapter (5).

7. Kit for closed double wall containers for independent watering of plants arranged therein according to one of claims 1 to **4, characterized in that** the ventilating and exhaust pipe (4) on the filling pipe (3) and/or on the filling hopper (2) by means of fastening clips (10).

8. Kit for closed double wall containers for independent watering of plants arranged according to claim 5, **characterized in that** the fastening clip (10) is arranged at least on both sides on the outer periphery of the filling hopper (2) and/or on the filling pipe (3) with clamping devices of different sizes for receiving ventilation pipes of different diameters.

9. Kit for closed double wall containers for independent watering of plants arranged therein according to one of claims 1 to 6, **characterized in that** the filling hopper (2) is equipped with a cover (12) which produces the form fit.

10. Kit for closed double wall containers for independent watering of plants arranged therein according to one of claims 1 to 7, **characterized in that** a float adapter (13) which serves for receiving a float, with water outlet openings (14) and exhaust openings (15) arranged below them, said openings being formed as apertures on the circumference of the adapter, is arranged insertably on the lower end of the filling pipe (3), wherein the float adapter (13) has in the interior an upwardly removable cone (17) for discharging the water during the filling process and an aperture (18) arranged centrally on the cone (17) for the float stem to pass through.

11. Kit for closed double wall containers for independent watering of plants arranged therein according to claim 10, **characterized in that** an extension sleeve (16) which serves for guiding the float is arranged on the float adapter (13).

## Revendications

1. Kit pour réservoirs à double paroi pour une irrigation autonome des plantations contenues, composé d'un entonnoir de remplissage avec tubulure de remplissage et d'un tuyau d'aération et d'évacuation, **caractérisé par le fait que** tant l'entonnoir (2) avec la tubulure de remplissage (3) installée que le tuyau d'aération et d'évacuation (4) sont disposés dans l'unité enfichable (1) à placer dans la zone de fond d'un réservoir à double paroi avec un adaptateur de ventilation (5), que cette unité enfichable (1) doit être installée dans la zone inférieure du réservoir à double paroi, dans une ouverture de réception destinée à être agencée avec l'extrémité inférieure du tuyau de remplissage (3) que l'unité enfichable (1) à l'extrémité inférieure de la tubulure de remplissage (3) présente un adaptateur de ventilation (5) équipé d'un tamis (6) servant de tuyau d'aération et d'évacuation, qu'un dispositif de réception (11) se trouve au niveau de l'adaptateur de ventilation (5) pour le tuyau d'aération et d'évacuation (4) sous forme d'orifice de niveau pour accueillir différentes sections de tuyaux d'aération et que le tuyau d'aération et d'évacuation (4) soit disposé dans une perforation dans la zone supérieure du réservoir à double paroi avec une liaison hermétiquement fermée.

2. Kit pour réservoirs à double paroi pour une irrigation autonome des plantations contenues selon l'exigence 1, **caractérisé par le fait que** l'entonnoir de remplissage (2) dispose d'une couronne dentelée (7) indiquant le niveau de débordement, où le rebord inférieur (8) des dents de la couronne dentelée (7) est plus bas que le rebord inférieur (9) du tuyau d'aération et d'évacuation (4) dans la zone de l'embouchure, au niveau de la paroi supérieure du réservoir à double paroi.

3. Kit pour réservoirs à double paroi pour une irrigation autonome des plantations contenues selon une des exigences 1 à 2, **caractérisé par le fait que** l'adaptateur d'aération (5) permettant de réguler le niveau de l'eau dans le réservoir à double paroi est installé de manière réglable en hauteur sur le tuyau de remplissage (3).

4. Kit pour réservoirs à double paroi pour une irrigation autonome des plantations contenues selon une des exigences 1 à 2, **caractérisé par le fait qu'**une des entrées et définitions de l'emplacement d'un flotteur du panier à flotteurs (20) est disposée à l'extrémité inférieure de la tubulure de remplissage (3).

5. Kit pour réservoirs à double paroi pour une irrigation autonome des plantations contenues selon une des exigences 1 à 2, **caractérisé par le fait qu'**une gaine d'étanchéité (19) conique qui se rétrécit vers le bas est disposée sous le tamis, au niveau de l'adaptateur d'aération (5).

6. Kit pour réservoirs à double paroi pour une irrigation autonome des plantations contenues selon l'exigence 5, **caractérisé par le fait qu'**une des entrées et définitions de l'emplacement d'un flotteur du panier à flotteurs (20) est disposée à l'extrémité inférieure de l'adaptateur d'aération (5).

7. Kit pour réservoirs à double paroi pour une irrigation autonome des plantations contenues selon une des exigences 1 à 4, **caractérisé par le fait que** le tuyau d'aération et d'évacuation (4) est fixé à la tubulure de remplissage (3) et/ou à l'entonnoir de remplissage (2) avec des clips de fixation (10).

8. Kit pour réservoirs à double paroi pour une irrigation autonome des plantations contenues selon l'exigence 5, **caractérisé par le fait que** le clip de fixation (10) est installé au moins des deux côtés de la périphérie extérieure de l'entonnoir de remplissage (2) et/ou de la tubulure de remplissage (3) avec des dispositifs de serrage de différentes tailles pour l'entrée de tuyaux de ventilation avec différents diamètres.

9. Kit pour réservoirs à double paroi pour une irrigation autonome des plantations contenues selon une des exigences 1 à 6, **caractérisé par le fait que** l'entonnoir de remplissage (2) est équipé d'un couvercle (12) à engagement positif.

10. Kit pour réservoirs à double paroi pour une irrigation autonome des plantations contenues selon une des exigences 1 à 7, **caractérisé par le fait qu'**un adaptateur de flotteur servant à l'inclusion d'un flotteur (13) est disposé à l'extrémité inférieure du tuyau de remplissage (3) et dispose d'ouvertures de sortie d'eau (14) sur sa surface sous forme de perforations et d'ouvertures d'aération enfichables (15) placées sur la partie inférieure, où l'adaptateur de flotteur (13) présente un cône (17) interne amovible par le haut pour le drainage de l'eau lors du processus de remplissage et une ouverture (18) placée au centre du cône (17) pour le passage de la tige de flotteur.

11. Kit pour réservoirs à double paroi pour une irrigation autonome des plantations contenues selon l'exigence 10, **caractérisé par le fait que** l'adaptateur de flotteur (13) présente une gaine de prolongement (16) servant à la conduite du flotteur.
